# EUROPEAN PATENT APPLICATION

(11) **EP 4 759 114 A1**
(43) Date of publication of application: **17.06.2026**
(21) Application number: 25174923.0
(22) Date of filing: 08.05.2025
(51) Int. Cl.: A01D 34/78, A01D 69/02, B60L 3/00

(54) **WHEELED WORK VEHICLE AND WHEELED MOWER**

(30) Priority: 11.12.2024 CN 202411820263
(71) Applicant: Nanjing Chervon Industry Co., Ltd., Nanjing, Jiangsu 211106 (CN)
(72) Inventor: SU, Wei, Nanjing (CN); FENG, Jifeng, Nanjing (CN); WANG, Lei, Nanjing (CN)
(74) Representative: Sun, Yiming

(57) **Abstract**

A wheeled work vehicle includes: a walking mechanism including walking wheels and a walking motor for driving the walking wheels; a work mechanism for performing a function of the wheeled work vehicle; a power supply assembly at least configured to power the walking motor; a temperature acquisition unit at least configured to acquire an operating temperature of the walking motor; a driver circuit connected to at least the walking motor to drive the walking motor; and a controller electrically connected to the temperature acquisition unit and the driver circuit, where the controller is configured to output a target instruction to the driver circuit so as to control an input signal of the walking motor. The controller is further configured to, when a parameter of the walking motor related to the operating temperature exceeds a preset range, adjust the target instruction to gradually reduce the input of the walking motor.

## Description

### TECHNICAL FIELD

The present application relates to the technical field of tool devices and, in particular, to a wheeled work vehicle and a wheeled mower.

### BACKGROUND

When a loaded mower climbs a slope, the temperature of a walking motor increases due to an excessive load. When a temperature rise of the walking motor is excessively large, the walking motor will burn out, causing a self-propelled system of the mower to lose power. As a result, the mower slides on the slope, thereby causing property loss and personal safety problems. Therefore, early warning of the temperature of the walking motor plays a significant role in the safe use of the mower.

This section provides background information related to the present application which is not necessarily prior art.

### SUMMARY

A wheeled work vehicle includes: a vehicle body; a walking mechanism mounted to the vehicle body, where the walking mechanism includes walking wheels and a walking motor for driving the walking wheels, and the walking motor includes a rotor and multiple stator windings; a work mechanism for performing a function of the wheeled work vehicle; a power supply assembly including at least one battery pack, where the power supply assembly is at least configured to power the walking motor; a temperature acquisition unit at least configured to acquire an operating temperature of the walking motor; a driver circuit connected to at least the walking motor to drive the walking motor; and a controller electrically connected to the temperature acquisition unit and the driver circuit, where the controller is configured to output a target instruction to the driver circuit so as to control an input of the walking motor. The controller is further configured to, when a parameter of the walking motor related to the operating temperature exceeds a preset range, adjust the target instruction to gradually reduce the input of the walking motor.

In some examples, the target instruction includes an instruction related to at least one of a duty cycle, a rotational speed, a current, torque, and power of the walking motor.

In some examples, the temperature acquisition unit includes a temperature sensor configured to acquire the operating temperature of the walking motor.

In some examples, the controller is further configured to, when the parameter of the walking motor related to the operating temperature exceeds the preset range, control the wheeled work vehicle to enter a failure mode and issue a warning signal to prompt a user.

In some examples, the warning signal includes at least one of a sound prompt and a light prompt.

In some examples, the controller is further configured to, when the wheeled work vehicle is in the failure mode, reduce a rotational speed of the walking motor or torque of the walking motor.

In some examples, the controller is further configured to, when the walking motor is in the failure mode, control the wheeled work vehicle to exit the failure mode if the parameter of the walking motor related to the operating temperature is restored to the preset range.

In some examples, the controller is configured to: when the parameter of the walking motor related to the operating temperature is greater than or equal to a first temperature threshold, control the wheeled work vehicle to enter a failure mode; and when the operating temperature is less than or equal to a second temperature threshold, control the wheeled work vehicle to exit the failure mode.

In some examples, the first temperature threshold is greater than or equal to the second temperature threshold.

In some examples, the controller is configured to, when the parameter of the walking motor related to the operating temperature is greater than or equal to the first temperature threshold, control the wheeled work vehicle to issue a warning signal to prompt a user.

In some examples, the controller is further configured to, after the wheeled work vehicle exits the failure mode, control an output signal of the walking motor based on an input instruction of a user.

In some examples, the walking motor is an outrunner.

In some examples, the temperature sensor is disposed on the walking motor.

In some examples, the work mechanism includes one of a mowing mechanism, a snow throwing mechanism, and a trailer mechanism.

The present application adopts the technical solution below. A wheeled mower includes: a vehicle body; a walking mechanism mounted to the vehicle body, where the walking mechanism includes walking wheels and a walking motor for driving the walking wheels, and the walking motor includes a rotor and multiple stator windings; a mowing mechanism including a mowing blade and a mowing motor for driving the mowing blade; a power supply assembly including at least one battery pack, where the power supply assembly is configured to power the walking motor and the mowing motor; a temperature acquisition unit at least configured to acquire an operating temperature of the walking motor; a driver circuit connected to at least the walking motor to drive the walking motor; and a controller electrically connected to the temperature acquisition unit and the driver circuit, where the controller is configured to output a control signal to the driver circuit so as to control the running of the walking motor. The controller is configured to: when a parameter of the walking motor related to the operating temperature is greater than or equal to a first temperature threshold, control the wheeled mower to enter a failure mode; and when the operating temperature is less than or equal to a second temperature threshold, control the wheeled mower to exit the failure mode. The first temperature threshold is greater than or equal to the second temperature threshold.

In some examples, the controller is further configured to, when the wheeled mower is in the failure mode, control the wheeled mower to issue a warning signal to prompt a user.

In some examples, the controller is further configured to, when the wheeled mower is in the failure mode, adjust the control signal to reduce a rotational speed of the walking motor or torque of the walking motor.

In some examples, the controller is further configured to, after the wheeled mower exits the failure mode, control an output signal of the walking motor based on an input instruction of a user.

The present application adopts the technical solution below. A wheeled work vehicle includes: a vehicle body; a walking mechanism mounted to the vehicle body, where the walking mechanism includes walking wheels and a walking motor for driving the walking wheels, and the walking motor includes a rotor and multiple stator windings; a work mechanism for performing a function of the wheeled work vehicle; a power supply assembly including at least one battery pack, where the power supply assembly is at least configured to power the walking motor; a temperature acquisition unit at least configured to acquire an operating temperature of the walking motor; a driver circuit connected to at least the walking motor to drive the walking motor; and a controller electrically connected to the temperature acquisition unit and the driver circuit, where the controller is configured to output a control signal to the driver circuit so as to control the running of the walking motor. The controller is configured to, when a parameter of the walking motor related to the operating temperature is greater than or equal to a first temperature threshold, control the wheeled work vehicle to issue a warning signal to prompt a user.

In some examples, the work mechanism includes one of a mowing mechanism, a snow throwing mechanism, and a trailer mechanism.

### BRIEF DESCRIPTION OF DRAWINGS

FIG. 1 is a schematic view of a manned mower according to an example of the present application;
FIG. 2 is a schematic view of a hand-push mower according to an example of the present application;
FIG. 3 is a schematic view of a trailer according to an example of the present application;
FIG. 4 is a schematic view of a snow thrower according to an example of the present application;
FIG. 5 is a schematic view of an electric motorcycle according to an example of the present application;
FIG. 6 is a block diagram of a wheeled work vehicle according to an example of the present application; and
FIG. 7 is a flowchart of an overtemperature protection method for a walking motor according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

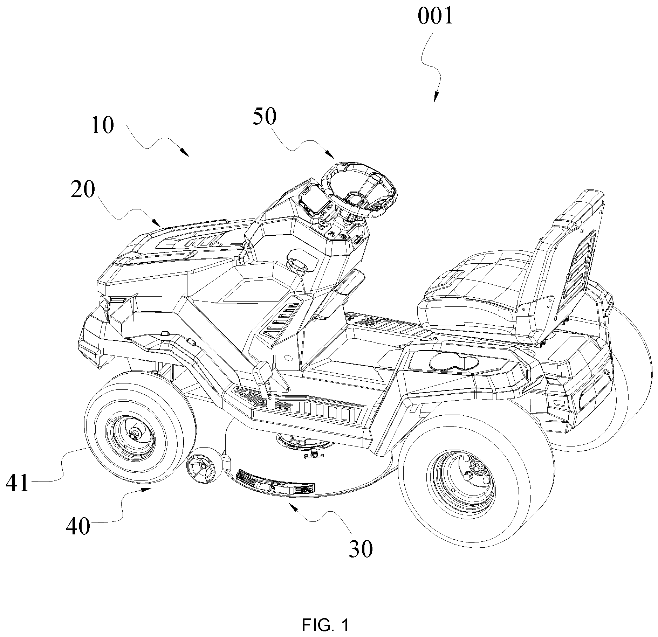

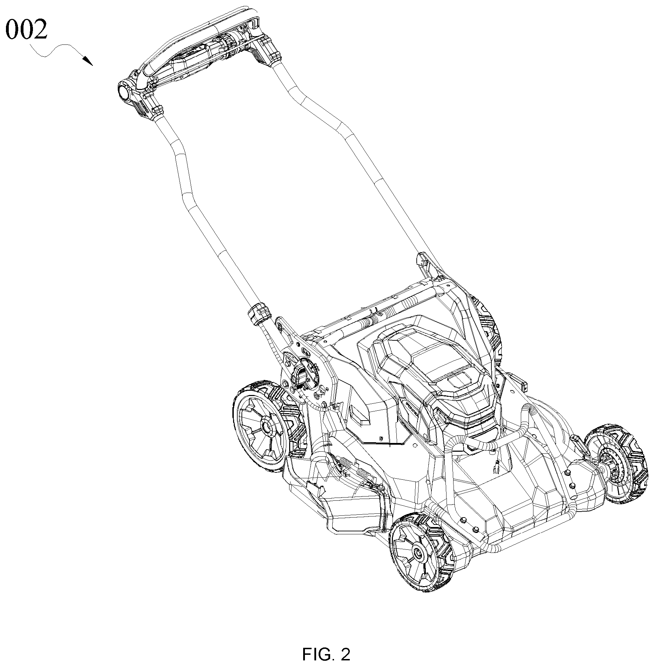

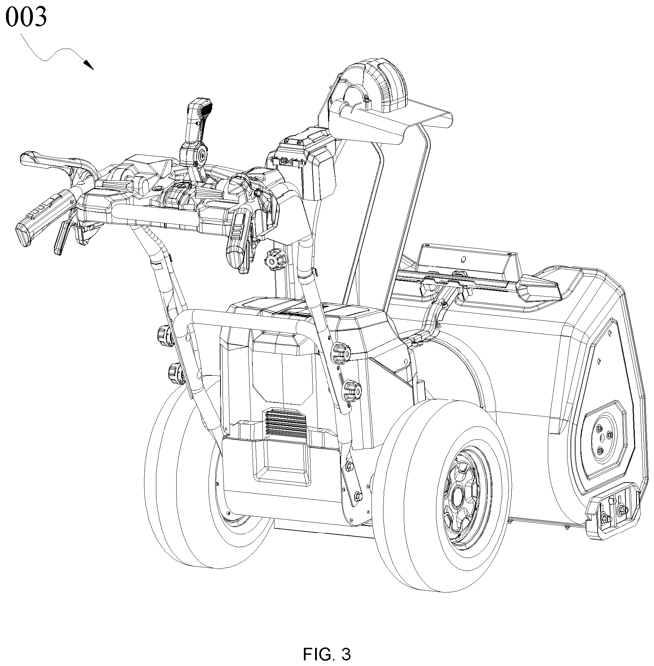

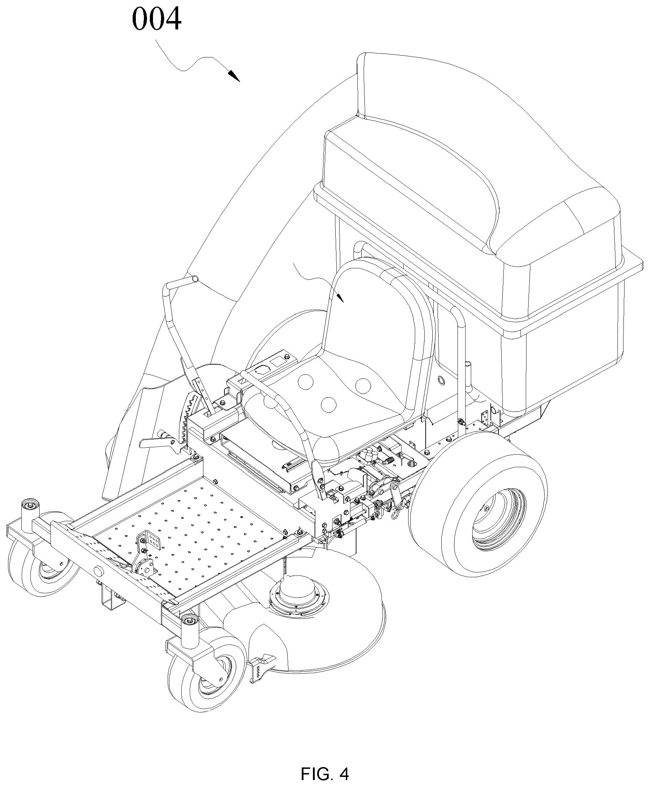

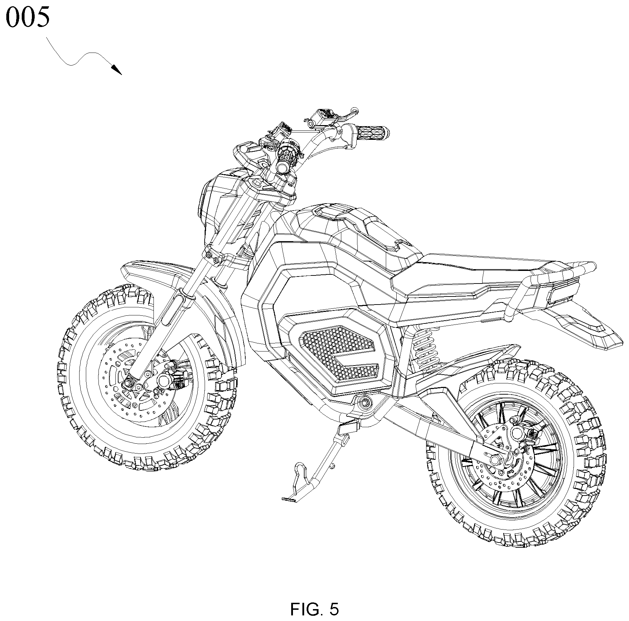

As shown in FIGS. 1 to 5, a wheeled work vehicle provided in an embodiment of the present application may include, but is not limited to, a wheeled mower such as a manned mower 001 or a hand-push mower 002, a trailer 003, a snow thrower 004, and an electric motorcycle 005. As long as the wheeled work vehicle adopts the substance of the technical solutions disclosed below, the wheeled work vehicle can fall within the scope of the present application.

As shown in FIG. 1, the wheeled work vehicle 001 disclosed in the present application is specifically a riding mower. A user may sit or stand on the riding mower to operate the riding mower to trim lawns and other vegetation. In this specification, front, rear, left, right, up, and down are described as directions shown in FIG. 1. Specifically, when the user sits or stands on the wheeled work vehicle 001 on the ground, it is defined that the direction which the user faces is front, the direction which the user faces away from is rear, the direction on the left-hand side of the user is left, the direction on the right-hand side of the user is right, the direction towards the ground is down, and the direction away from the ground is up.

Referring to FIG. 1, the wheeled work vehicle 001 includes a vehicle body 10, a power supply assembly 20, a work mechanism 30, and a walking mechanism 40. The walking mechanism 40 is mounted to the vehicle body 10. The walking mechanism 40 includes walking wheels 41 and a walking motor for driving the walking wheels 41. The walking motor includes a rotor and multiple stator windings. The work mechanism is used for performing a function of the wheeled work vehicle 001. The power supply assembly 20 is configured to supply energy to the work mechanism 30, the walking mechanism 40, and the like, enabling the outdoor work vehicle to function as a power tool. An electric mowing device is more environmentally friendly and more energy-efficient than a fuel-based riding mower. The power supply assembly 20 includes one battery pack, or two battery packs, or more. The energy of the multiple battery packs may be the same or different. In some examples, each of the battery packs has a rated voltage of higher than or equal to 20 V and lower than or equal to 80 V. In some examples, the power supply assembly 20 includes at least one battery pack with energy of greater than or equal to 0.1 kW·h. In some examples, the power supply assembly 20 includes at least one battery pack with energy of greater than or equal to 0.4 kW·h. In some examples, the power supply assembly 20 includes at least one battery pack with energy of greater than or equal to 1.5 kW·h. In some examples, the power supply assembly 20 includes at least one battery pack with energy of greater than or equal to 2 kW·h.

In some examples, the work assembly 30 specifically includes a mowing assembly. The mowing assembly 30 includes a mowing element for cutting lawns.

In some examples, the wheeled work vehicle 001 includes an operation assembly 50. The user operates the operation assembly 50 to control the wheeled work vehicle 001 to move forward, move backward, and turn and control operating states of the wheeled work vehicle 001 such as the rotational speed of the walking mechanism 40 and the state of the work mechanism 30.

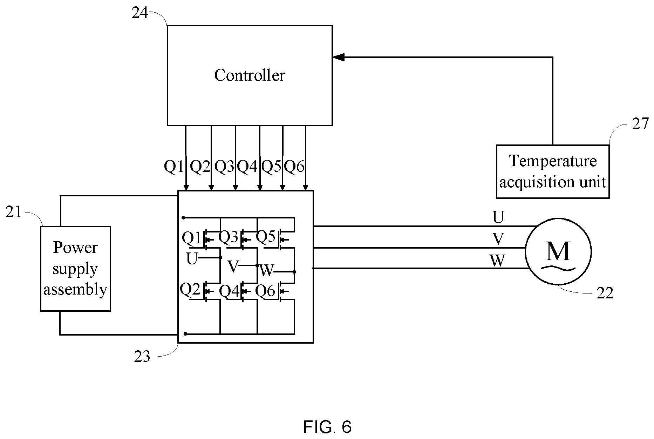

FIG. 6 is a block diagram of the wheeled work vehicle according to an example of the present application. As shown in FIG. 6, the wheeled work vehicle provided in the example of the present application includes the vehicle body, the walking mechanism, the work mechanism, a power supply assembly 21, a temperature acquisition unit 27, a driver circuit 23, and a controller 24. The walking mechanism, the work mechanism, and the power supply assembly 21 are mounted to the vehicle body. The walking mechanism includes the walking wheels and the walking motor 22 for driving the walking wheels. The work mechanism is used for performing the function of the wheeled work vehicle. In some examples, when the wheeled work vehicle is the wheeled mower such as the manned mower 001 or the hand-push mower 002, the work mechanism is a mowing mechanism. In some examples, when the wheeled work vehicle is the snow thrower 004, the work mechanism is a snow throwing mechanism. In some examples, when the wheeled work vehicle is the trailer 003, the work mechanism is a trailer mechanism.

The battery pack of the present application may include a lithium iron phosphate battery pack, a lithium battery pack, and a full-tab battery pack to enable the power supply assembly 21 to power the walking motor or the work assembly.

The temperature acquisition unit 27 is disposed on the walking motor 22 and is at least configured to acquire an operating temperature of the walking motor 22. In some examples, the temperature acquisition unit 27 includes a temperature sensor. The temperature sensor is mounted on the walking motor to acquire the operating temperature of the walking motor 22. In some examples, the temperature acquisition unit also includes a computing unit that estimates the temperature of the walking motor 22 through an algorithm.

The walking motor 22 includes the rotor and the multiple stator windings. In some examples, the walking motor is a three-phase brushless motor including a rotor with a permanent magnet and three-phase stator windings U, V, and W that are commutated electronically. In some examples, a star connection is adopted between the three-phase stator windings U, V, and W. In other examples, a delta connection is adopted between the three-phase stator windings U, V, and W.

The driver circuit 23 is electrically connected to the stator windings U, V, and W of the walking motor and is configured to transmit the current from the power supply assembly 21 to the stator windings U, V, and W so as to drive the walking motor to rotate. In an example, the driver circuit 23 includes multiple switching elements Q1, Q2, Q3, Q4, Q5, and Q6. Agate terminal of each switching element is electrically connected to the controller 24 and is configured to receive a control signal from the controller 24. A drain of each switching element or a source of each switching element is connected to the stator windings U, V, and W of the walking motor. The switching elements Q1 to Q6 receive control signals from the controller 24 to change their respective on states, thereby changing the current and/or the voltage loaded by the power supply assembly 21 to the stator windings U, V, and W of the walking motor to drive the walking motor to run. In an example, the driver circuit 23 may be a three-phase bridge driver circuit including six controllable semiconductor power devices (such as field-effect transistors (FETs), bipolar junction transistors (BJTs), or insulated-gate bipolar transistors (IGBTs)). It is to be understood that the preceding switching elements may be any other types of solid-state switches, such as IGBTs or BJTs.

The controller 24 is electrically connected to the temperature acquisition unit 27 and the driver circuit 23. The controller 24 is configured to output a target instruction to the driver circuit 23 so as to control an input signal of the walking motor. The target instruction may be understood as a control signal for controlling the running of the walking motor.

In this example, the controller 24 is configured to, when a parameter of the walking motor related to the operating temperature exceeds a preset range, adjust the target instruction to gradually reduce the input signal of the walking motor. The parameter of the walking motor related to the operating temperature includes, but is not limited to, at least one of a real-time temperature of the walking motor, a temperature rise of the walking motor, and efficiency of the walking motor. The preset range may be determined according to a characteristic of the walking motor. In some examples, the parameter of the walking motor related to the operating temperature is the temperature rise of the walking motor, and the preset range is a temperature rise range of the walking motor that normally operates. The input signal of the walking motor includes, but is not limited to, at least one of a duty cycle of a drive signal and/or a current.

In some examples, the target instruction may include, but is not limited to, an instruction related to at least one of a duty cycle, a speed, a current, torque, and power of the walking motor. Specifically, the parameter of the walking motor related to the operating temperature, such as the temperature rise of the walking motor, exceeds the preset range. It is indicated that the temperature rise of the walking motor is excessively large, posing a risk of damage to the walking motor. In this manner, the target instruction may be adjusted so that the input signal of the walking motor is gradually reduced, thereby gradually reducing the rotational speed of the walking motor.

The walking mechanism of the wheeled mower includes the walking wheels and the walking motor for driving the walking wheels. The temperature acquisition unit of the wheeled mower is configured to acquire the operating temperature of the walking motor. The driver circuit of the wheeled mower is connected to the walking motor to drive the walking motor. In addition, the controller is electrically connected to the temperature acquisition unit and the driver circuit and is configured to output the target instruction to the driver circuit so as to control the input signal of the walking motor. The controller is further configured to, when the parameter of the walking motor related to the operating temperature exceeds the preset range, adjust the target instruction to gradually reduce the input signal of the walking motor. In this manner, when the temperature of the walking motor is excessively high, the walking motor is decelerated so that the temperature of the walking motor is reduced and the overtemperature of the walking motor is avoided. In addition, the walking motor subjected to the overtemperature does not suddenly lose power. Thus, the user has an adaptation process, thereby improving user experience. In addition, the user can be prompted of the overtemperature of the walking motor through the deceleration of the walking motor.

Optionally, the controller 24 is further configured to, when the parameter of the walking motor related to the operating temperature exceeds the preset range, control the wheeled work vehicle to enter a failure mode and issue a warning signal to prompt the user.

The failure mode is an operating mode different from a normal operating mode. In some examples, when the wheeled work vehicle is in the failure mode, the controller 24 may reduce or limit the rotational speed or torque of the walking motor to protect related devices or elements of the wheeled work vehicle.

In some examples, the vehicle body of the wheeled work vehicle is provided with a failure light or a display screen. When the wheeled work vehicle is in the failure mode, the fault light is controlled to be always on or flash or a related indication is displayed on the display screen to prompt the user of a relatively large temperature rise of the walking motor.

In some examples, when the wheeled work vehicle is in the failure mode, the controller 24 reduces the rotational speed or torque of the walking motor while controlling the failure light to be always on or flash.

In some examples, when the wheeled work vehicle is in the failure mode, the controller 24 reduces the rotational speed or torque of the walking motor. Until the walking motor stops, the user is allowed to input an instruction again to control the walking motor to run.

The warning signal is used for prompting the user of a current operating state of the wheeled work vehicle. In some examples, the warning signal may include, but is not limited to, one or more of controlling the walking motor to decelerate, reducing the torque, and performing a sound prompt, a text prompt, or a light prompt.

Optionally, the controller 24 is further configured to, when the walking motor is in the failure mode, control the wheeled work vehicle to exit the failure mode if the parameter of the walking motor related to the operating temperature is restored to the preset range.

The wheeled work vehicle is controlled to exit the failure mode, that is, the wheeled work vehicle enters the normal operating mode. In the normal operating mode, the wheeled work vehicle operates according to an instruction inputted by the user.

The wheeled work vehicle is controlled to exit the failure mode, that is, the wheeled work vehicle enters the normal operating mode. In the normal operating mode, the wheeled work vehicle operates according to the instruction inputted by the user, and the wheeled work vehicle is controlled to stop issuing the warning signal.

Based on the same concept, an example of the present application provides a wheeled mower. With continued reference to FIG. 6, the wheeled mower includes a vehicle body, a walking mechanism, a mowing mechanism, a power supply assembly 21, a temperature acquisition unit 27, a driver circuit 23, and a controller 24. The walking mechanism, a work mechanism, and the power supply assembly 21 are mounted to the vehicle body. The walking mechanism includes walking wheels and a walking motor 22 for driving the walking wheels. The walking motor includes a rotor and multiple stator windings. The mowing mechanism includes a mowing blade and a mowing motor for driving the mowing blade. The power supply assembly 21 includes at least one battery pack. The power supply assembly 21 is configured to power the walking motor and the mowing motor. The temperature acquisition unit 27 is at least configured to acquire an operating temperature of the walking motor. The driver circuit 23 is connected to at least the walking motor to drive the walking motor. The controller 24 is electrically connected to the temperature acquisition unit 27 and the driver circuit 23. The controller 24 is configured to output a control signal to the driver circuit 23 so as to control the running of the walking motor.

The control signal may include, but is not limited to, a pulse-width modulation (PWM) signal or a current.

In this example, the controller 24 is configured to, when a parameter of the walking motor related to the operating temperature exceeds a preset range, adjust the control signal to reduce at least one of the rotational speed, torque, or power of the walking motor.

The parameter of the walking motor related to the operating temperature may include, but is not limited to, the operating temperature of the walking motor, a temperature rise of the walking motor, and efficiency of the walking motor.

The preset range may be determined according to a characteristic of the walking motor. In some examples, the parameter of the walking motor related to the operating temperature is the temperature rise of the walking motor, and the preset range is a temperature rise range of the walking motor that normally operates.

Specifically, the parameter of the walking motor related to the operating temperature, such as the temperature rise of the walking motor, exceeds the preset range. It is indicated that the temperature rise of the walking motor is excessively large, posing a risk of damage to the walking motor. In this case, the control signal such as a PWM duty cycle or a current is adjusted so that at least one of the rotational speed, torque, or power of the walking motor is reduced, thereby achieving the objects of protecting the walking motor and prompting the user.

An example of the present application further provides a wheeled mower. With continued reference to FIG. 6, the wheeled mower includes a vehicle body, a walking mechanism, a mowing mechanism, a power supply assembly 21, a temperature acquisition unit 27, a driver circuit 23, and a controller 24. The controller 24 is configured to output a control signal to the driver circuit 23 so as to control the running of a walking motor.

The control signal may include, but is not limited to, a PWM signal or a current.

In some examples, the controller 24 is configured to: when a parameter of the walking motor related to an operating temperature is greater than or equal to a first temperature threshold, control the wheeled mower to enter a failure mode; and when the operating temperature is less than or equal to a second temperature threshold, control the wheeled mower to exit the failure mode.

The parameter of the walking motor related to the operating temperature may include, but is not limited to, the operating temperature of the walking motor, a temperature rise of the walking motor, and efficiency of the walking motor.

The first temperature threshold is greater than or equal to the second temperature threshold. The first temperature threshold may be determined according to a characteristic of the walking motor. In some examples, the parameter of the walking motor related to the operating temperature is the temperature rise of the walking motor, and the first temperature threshold is 110°C. That is, when the temperature rise of the walking motor is greater than or equal to 110°C, the wheeled mower is controlled to enter the failure mode.

The second temperature threshold is also determined according to the characteristic of the walking motor. The parameter of the walking motor related to the operating temperature is the temperature rise of the walking motor, and the second temperature threshold is 100°C. That is, when the walking motor is in the failure mode, the wheeled mower is controlled to exit the failure mode if the temperature rise of the walking motor is less than or equal to 100°C.

The failure mode is an operating mode different from a normal operating mode of the wheeled work vehicle. In some examples, when the wheeled work vehicle is in the failure mode, the control signal is adjusted so that the rotational speed or torque of the walking motor is reduced and related devices or elements of the wheeled work vehicle are protected. In some examples, when the wheeled mower is in the failure mode, the wheeled mower is controlled to issue a warning signal to prompt the user of a relatively large temperature rise of the walking motor.

In some examples, when the wheeled work vehicle is in the failure mode, the controller 24 reduces the rotational speed or torque of the walking motor. Until the walking motor stops, the user is allowed to input an instruction again to control the walking motor to run.

Optionally, the controller 24 is further configured to, after the wheeled mower exits the failure mode, control an output signal of the walking motor based on an input instruction of the user.

The input instruction of the user may be, but is not limited to, a control instruction inputted through a switch/a speed regulation button or a device terminal on the body of the wheeled mower.

Specifically, in a running process of the wheeled mower, if the parameter of the walking motor related to the operating temperature is greater than or equal to the first temperature threshold, the wheeled mower is controlled to enter the failure mode. When the wheeled mower is in the failure mode, the wheeled mower is controlled to issue the warning signal to prompt the user, and/or the control signal is adjusted so that the rotational speed or torque of the walking motor is reduced. When the parameter of the walking motor related to the operating temperature decreases to be less than the second temperature threshold, the wheeled mower is controlled to exit the failure mode. In this case, the controller 24 controls the output signal of the walking motor based on the input instruction of the user.

An example of the present application further provides a wheeled work vehicle. With continued reference to FIG. 6, the wheeled work vehicle provided in the example of the present application includes a vehicle body, a walking mechanism, a work mechanism, a power supply assembly 21, a temperature acquisition unit 27, a driver circuit 23, and a controller 24. The controller 24 is configured to output a control signal to the driver circuit 23 so as to control the running of a walking motor.

In some examples, the controller 24 is configured to, when a parameter of the walking motor related to an operating temperature is greater than or equal to the first temperature threshold, control the wheeled work vehicle to issue a warning signal to prompt the user.

In some examples, the warning signal includes at least one of deceleration, torque reduction, a sound prompt, and a light prompt.

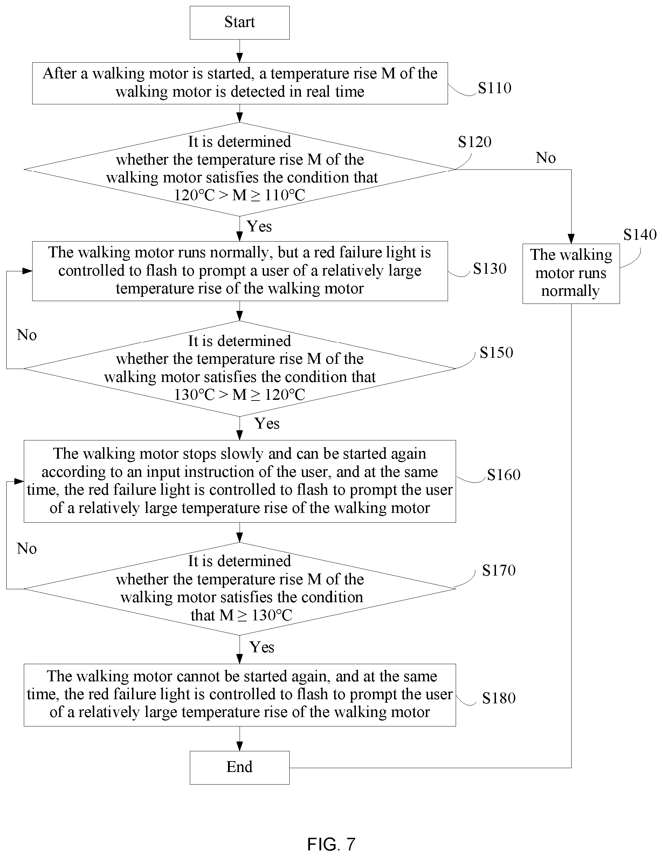

The present application further provides an overtemperature protection method for the walking motor. FIG. 7 is a flowchart of the overtemperature protection method for the walking motor according to an example of the present application. Referring to FIG. 7, the overtemperature protection method for the walking motor includes the steps below.

In S110, after the walking motor is started, a temperature M of the walking motor is detected in real time.

In S120, it is determined whether the temperature M of the walking motor satisfies the condition that 120°C > M ≥ 110°C. If so, S130 is performed. Otherwise, S140 is performed.

In S130, the walking motor runs normally, but a red failure light is controlled to flash to prompt the user of a relatively large temperature rise of the walking motor.

In S140, the walking motor runs normally.

In S150, it is determined whether the temperature M of the walking motor satisfies the condition that 130°C > M ≥ 120°C. If so, S160 is performed. Otherwise, S130 is performed.

In S160, the walking motor stops slowly and can be started again according to an input instruction of the user, and at the same time, the red failure light is controlled to flash to prompt the user of a relatively large temperature rise of the walking motor.

In S170, it is determined whether the temperature M of the walking motor satisfies the condition that M ≥ 130°C. If so, S180 is performed. Otherwise, S160 is performed.

In S180, the walking motor cannot be started again, and at the same time, the red failure light is controlled to flash to prompt the user of a relatively large temperature rise of the walking motor.

The wheeled work vehicle is a hand-push wheeled vehicle and a riding wheeled vehicle. A temperature sensor is disposed on the walking motor of the wheeled work vehicle. A parameter related to the operating temperature of the walking motor is the temperature M of the walking motor.

In an example, the wheeled work vehicle is a hand-push mower with two cutting decks. The wheeled work vehicle includes a self-propelled assembly based on the walking motor to provide self-propelled power for the hand-push vehicle. The implementation logic is described below.

In the process where the walking motor runs normally, the temperature detection unit detects the temperature M of the walking motor in real time. When 120°C > M ≥ 110°C, the controller controls the walking motor to enter a failure mode. In the failure mode, the walking motor runs normally, but the failure light gives an alarm to prompt the user of a relatively large temperature rise of the walking motor. When 130°C > M ≥ 120°C, the controller controls the walking motor to decelerate slowly. At the same time, the failure light is controlled to give an alarm to prompt the user of an excessively large temperature rise of the walking motor. In addition, the user is allowed to continue starting the walking motor to cause the wheeled work vehicle to walk. In this case, the walking motor operates normally at a speed set by the user. When M ≥ 130°C, the walking motor is controlled to decelerate slowly to stop, and the failure light gives an alarm to prompt the user of the overtemperature of the walking motor. In addition, the user is not allowed to continue starting the walking motor to cause the wheeled work vehicle to walk. When the temperature M of the walking motor is restored to below 105°C, normal electronic control logic of the walking motor is restored. In this case, the user is allowed to continue starting the walking motor to cause the wheeled work vehicle to walk. However, a buzzer is controlled to give an alarm, and a liquid crystal screen is controlled to prompt that the temperature rise of the walking motor is excessively large. When the temperature M of the walking motor is restored to below 100°C, the controller controls the walking motor to exit the failure mode. In this case, the walking motor runs according to the input instruction of the user. In addition, the failure light and the buzzer stop alarming, and the liquid crystal screen no longer prompts that the temperature rise of the walking motor is excessively large.

In another example, the wheeled work vehicle is a riding wheeled vehicle, and the implementation logic thereof is as follows: in the process where the walking motor runs normally, the temperature M of the walking motor is detected in real time. When the temperature M of the walking motor is less than 110°C, the walking motor does not enter the failure mode, but a negative temperature coefficient (NTC) open circuit is compatible.

When 110°C ≤ M < 120°C, the walking motor enters the failure mode. The buzzer gives an alarm (each alarm period lasts for 3s, and the buzzer sounds for 1s in each alarm period), and the liquid crystal screen prompts the temperature rise of the walking motor (each prompt period lasts for 3s, and the prompt is performed for 2s in each period). The walking motor runs normally. When 120°C ≤ M < 130°C, the buzzer continues giving the alarm, and the liquid crystal screen continues prompting the temperature rise of the walking motor. At the same time, the rotational speed of the walking motor is controlled to decrease to 60% of the normal rotational speed, and the torque remains unchanged so that the user is prompted of an excessively large temperature rise of the walking motor. In this case, the user is allowed to start the walking motor again to cause the wheeled work vehicle to walk. When M ≥ 130°C, the buzzer continues giving the alarm, and the liquid crystal screen continues prompting the temperature rise of the walking motor. At the same time, the rotational speed and torque of the walking motor are each controlled to decrease to 60% of the rotational speed and torque in a normal running process until the walking motor stops, and the user is not allowed to start the walking motor again to cause the wheeled work vehicle to walk.

When the temperature of the walking motor is restored to below 115°C, the controller can start the walking motor according to the input instruction of the user. However, the rotational speed and torque of the walking motor are each 60% of the rotational speed and torque in the normal running process. The buzzer continues giving the alarm, and the liquid crystal screen continues prompting the temperature rise of the walking motor. When the temperature of the walking motor is restored to below 105°C, the normal electronic control logic of the walking motor is restored. However, the buzzer gives the alarm, and the liquid crystal screen continues the prompt. When the temperature M of the walking motor is restored to below 100°C, the walking motor exits the failure mode. In this case, the walking motor runs according to the input instruction of the user. In addition, the failure light and the buzzer stop alarming, and the liquid crystal screen no longer prompts that the temperature rise of the walking motor is excessively large.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A wheeled work vehicle, comprising:
a vehicle body (10);
a walking mechanism (40) mounted to the vehicle body, wherein the walking mechanism comprises walking wheels and a walking motor (22) for driving the walking wheels, and the walking motor comprises a rotor and a plurality of stator windings;
a work mechanism (30) for performing a function of the wheeled work vehicle;
a power supply assembly (21) comprising at least one battery pack, wherein the power supply assembly is at least configured to power the walking motor;
a temperature acquisition unit (27) at least configured to acquire an operating temperature of the walking motor;
a driver circuit (23) connected to at least the walking motor to drive the walking motor; and
a controller (24) electrically connected to the temperature acquisition unit and the driver circuit, wherein the controller is configured to output a target instruction to the driver circuit so as to control an input of the walking motor;
wherein the controller is further configured to, when a parameter of the walking motor related to the operating temperature exceeds a preset range, adjust the target instruction to gradually reduce the input of the walking motor.

2. The wheeled work vehicle according to claim 1, wherein the target instruction comprises an instruction related to at least one of a duty cycle, a rotational speed, a current, torque, and power of the walking motor.

3. The wheeled work vehicle according to claim 1, wherein the temperature acquisition unit comprises a temperature sensor configured to acquire the operating temperature of the walking motor.

4. The wheeled work vehicle according to claim 1, wherein the controller is further configured to, when the parameter of the walking motor related to the operating temperature exceeds the preset range, control the wheeled work vehicle to enter a failure mode and issue a warning signal to prompt a user.

5. The wheeled work vehicle according to claim 4, wherein the warning signal comprises at least one of a sound prompt and a light prompt.

6. The wheeled work vehicle according to claim 4, wherein the controller is further configured to, when the wheeled work vehicle is in the failure mode, reduce a rotational speed of the walking motor or torque of the walking motor.

7. The wheeled work vehicle according to claim 4, wherein the controller is further configured to, when the walking motor is in the failure mode, control the wheeled work vehicle to exit the failure mode if the parameter of the walking motor related to the operating temperature is restored to the preset range.

8. The wheeled work vehicle according to claim 1, wherein the controller is configured to: when the parameter of the walking motor related to the operating temperature is greater than or equal to a first temperature threshold, control the wheeled work vehicle to enter a failure mode; and when the operating temperature is less than or equal to a second temperature threshold, control the wheeled work vehicle to exit the failure mode.

9. The wheeled work vehicle according to claim 8, wherein the first temperature threshold is greater than or equal to the second temperature threshold.

10. The wheeled work vehicle according to claim 8, wherein the controller is configured to, when the parameter of the walking motor related to the operating temperature is greater than or equal to the first temperature threshold, control the wheeled work vehicle to issue a warning signal to prompt a user.

11. The wheeled work vehicle according to claim 7 or 8, wherein the controller is further configured to, after the wheeled work vehicle exits the failure mode, control an output signal of the walking motor based on an input instruction of a user.

12. The wheeled work vehicle according to claim 1, wherein the walking motor is an outrunner.

13. The wheeled work vehicle according to claim 1, wherein the temperature sensor is disposed on the walking motor.

14. The wheeled work vehicle according to claim 1, wherein the work mechanism comprises one of a mowing mechanism, a snow throwing mechanism, and a trailer mechanism.
